# EUROPEAN PATENT APPLICATION

(11) **EP 1 528 699 A2**
(43) Date of publication of application: **04.05.2005**
(21) Application number: 04025565.5
(22) Date of filing: 27.10.2004
(51) Int. Cl.: H04B 10/213

(54) **Method and system for increasing network capacity in an optical network**

(30) Priority: 29.10.2003 US 695711
(71) Applicant: FUJITSU LIMITED, Kawasaki-shi, Kanagawa 211-8588 (JP)
(72) Inventor: Tian, Cechan, Plano Texas 75025 (US); Aoki, Yasuhiko, Kawasaki 211-0041 (JP); Kinoshita, Susumu, Plano Texas 75024 (US)
(74) Representative: HOFFMANN - EITLE

(57) **Abstract**

An optical network includes an optical ring operable to communicate optical traffic and a plurality of nodes coupled to the optical ring. Each node is operable to passively add and drop one or more traffic streams to and from the optical ring. Each traffic stream comprises at least one channel. The plurality of nodes comprise a hub node operable to selectively pass or terminate a plurality of individual sub-bands of the optical traffic and a plurality of sub-band nodes each operable to terminate a respective sub-band of the optical traffic.

## Description

### TECHNICAL FIELD OF THE INVENTION

The present invention relates generally to optical networks and, more particularly, to a method and system for increasing network capacity in an optical network.

### BACKGROUND OF THE INVENTION

Telecommunications systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity. In WDM and DWDM networks, a number of optical channels are carried in each fiber at disparate wavelengths. Network capacity is based on the number of wavelengths, or channels, in each fiber, the bandwidth, or size, of the channels and the types of nodes utilized in the network.

### SUMMARY OF THE INVENTION

The present invention provides a method and system for increasing network capacity of an optical network that substantially eliminates or reduces at least some of the disadvantages and problems associated with previous methods and systems.

In accordance with a particular embodiment of the present invention, an optical network includes an optical ring operable to communicate optical traffic and a plurality of nodes coupled to the optical ring. Each node is operable to passively add and drop one or more traffic streams to and from the optical ring. Each traffic stream comprises at least one channel. The plurality of nodes comprise a hub node operable to selectively pass or terminate a plurality of individual sub-bands of the optical traffic and a plurality of sub-band nodes each operable to terminate a respective sub-band of the optical traffic.

Particular embodiments may include a hub node operable to selectively pass or terminate a plurality of individual channels of the optical traffic. The plurality of nodes of the optical network may comprise a coupler node operable to drop and continue optical traffic passing through the coupler node. The hub node may comprise a demultiplexer operable to demultiplex the optical traffic into its constituent sub-bands or channels, a plurality of switches each operable to pass or terminate a respective sub-band or channel and a multiplexer operable to multiplex each sub-band or channel passed at the plurality of switches for communication on the optical ring. The plurality of sub-band nodes may each comprise a sub-band filter operable to block optical traffic in a respective sub-band. The optical network may also comprise a combination sub-band node operable to terminate a plurality of sub-bands of the optical traffic using a plurality of cascaded sub-band filters each operable to block optical traffic in a respective sub-band.

In accordance with another embodiment, an optical network includes an optical ring operable to communicate optical traffic and a plurality of nodes coupled to the optical ring. Each node comprises at least one transport element operable to passively add and drop one or more traffic streams to and from the optical ring. Each traffic stream comprises at least one channel. The plurality of nodes comprises a combination node. The combination node comprises a coupler node transport element operable to drop and continue optical traffic passing through the coupler node transport element. The combination node also comprises a hub node transport element cascaded with the coupler node transport element. The hub node transport element is operable to selectively pass or terminate a plurality of individual sub-bands of the optical traffic. The plurality of nodes may further comprise a plurality of sub-band nodes each operable to terminate a respective sub-band of the optical traffic.

In accordance with yet another embodiment, an optical network includes an optical ring operable to communicate optical traffic. The optical network also includes a plurality of nodes coupled to the optical ring. Each node comprises at least one transport element operable to passively add and drop one or more traffic streams to and from the optical ring. Each traffic stream comprises at least one channel. The plurality of nodes comprises a combination node. The combination node comprises a sub-band node transport element operable to terminate a respective sub-band of the optical traffic. The combination node also comprises a hub node transport element cascaded with the sub-band node transport element. The hub node transport element is operable to selectively pass or terminate a plurality of individual sub-bands of the optical traffic. The plurality of nodes may further comprise a plurality of sub-band nodes each operable to terminate a respective sub-band of the optical traffic.

In accordance with another embodiment, an optical network includes an optical ring operable to communicate optical traffic and a plurality of nodes coupled to the optical ring. Each node is operable to passively add and drop one or more traffic streams to and from the optical ring. Each traffic stream comprises at least one channel. The plurality of nodes comprises a plurality of hub nodes operable to selectively pass or terminate a plurality of individual sub-bands of the optical traffic. The plurality of nodes also comprises a plurality of sub-band nodes each operable to terminate a respective sub-band of the optical traffic. The plurality of hub nodes form a plurality of photonic domains each operable to communicate different traffic streams in the same sub-bands without interference. The plurality of hub nodes may comprise two hub nodes that form two photonic domains. Each hub node may comprise a demultiplexer operable to demultiplex the optical traffic into its constituent sub-bands or channels, a plurality of switches each operable to pass or terminate a respective sub-band or channel and a multiplexer operable to multiplex each sub-band or channel passed at the plurality of switches for communication on the optical ring. The plurality of switches may be reconfigurable to provide optical shared path protection in the event of a fiber cut or other error in the network.

Technical advantages of particular embodiments of the present invention include an optical network that combines sub-band nodes, hub nodes and coupler nodes on a ring. Accordingly, a maximum number of nodes that may be used on a ring while maintaining optical unidirectional path-switched ring protection on the ring may be increased. In some embodiments, transport elements unique to sub-band nodes, hub nodes and coupler nodes, respectively may be combined into a single node. In such cases, the number of ports to and from which traffic may be added and dropped from the optical network may be increased. Moreover, in some embodiments the cascading at a particular node of transport elements of various node types may aid in increasing the number of add channels available for the adding of optical traffic.

Other technical advantages of particular embodiments include an optical network with multiple hub nodes forming multiple photonic domains of the network. Particular channels and sub-bands may be reused in the different photonic domains to carry optical traffic thus increasing network capacity. In particular circumstances, switches of each hub node may be reconfigured to provide protection to the network in the event of a fiber cut or other error.

Other technical advantages will be readily apparent to one skilled in the art from the following figures, descriptions and claims. Moreover, while specific advantages have been enumerated above, various embodiments may include all, some or none of the enumerated advantages.

### BRIEF DESCRIPTION OF THE DRAWINGS

For a more complete understanding of particular embodiments of the invention and their advantages, reference is now made to the following descriptions, taken in conjunction with the accompanying drawings, in which:
FIGURE 1 is a block diagram illustrating an optical network, in accordance with one embodiment of the present invention;
FIGURE 2 is a block diagram illustrating a coupler node, in accordance with a particular embodiment of the present invention;
FIGURE 3 is a block diagram illustrating a sub-band node, in accordance with a particular embodiment of the present invention;
FIGURE 4A is a block diagram illustrating a hub node, in accordance with a particular embodiment of the present invention;
FIGURE 4B is a block diagram illustrating a mux/demux unit of the hub node of FIGURE 4A, in accordance with another embodiment of the present invention;
FIGURE 5 is a block diagram illustrating an optical network with sub-band nodes and a hub node, in accordance with a particular embodiment of the present invention;
FIGURE 6 is a block diagram illustrating an optical network with sub-band nodes, a coupler node and a hub node, in accordance with a particular embodiment of the present invention;
FIGURE 7 is a block diagram illustrating an optical network with a coupler node, a sub-band node and a combination hub node, in accordance with a particular embodiment of the present invention;
FIGURE 8 is a block diagram illustrating a sub-band unit for the combination node of FIGURE 7, in accordance with another embodiment of the present invention;
FIGURE 9A illustrates certain components of a combination sub-band node with cascaded sub-band rejection filters, in accordance with a particular embodiment of the present invention;
FIGURE 9B illustrates certain components of a combination sub-band node with cascaded sub-band transport elements, in accordance with a particular embodiment of the present invention;
FIGURE 9C illustrates certain components of a combination sub-band node with cascaded sub-band and coupler transport elements, in accordance with a particular embodiment of the present invention;
FIGURE 10 illustrates a transport element with a sub-band rejection filter, in accordance with a particular embodiment of the present invention;
FIGURE 11 illustrates an optical network with two hub nodes forming two photonic domains, in accordance with a particular embodiment of the present invention;
FIGURES 12A and 12B illustrate an example of optical shared path protection (OSPP) in an optical network with two hub nodes forming two photonic domains, in accordance with a particular embodiment of the present invention; and
FIGURE 13 illustrates an optical network with three hub nodes forming three photonic domains, in accordance with a particular embodiment of the present invention.

### DETAILED DESCRIPTION OF THE INVENTION

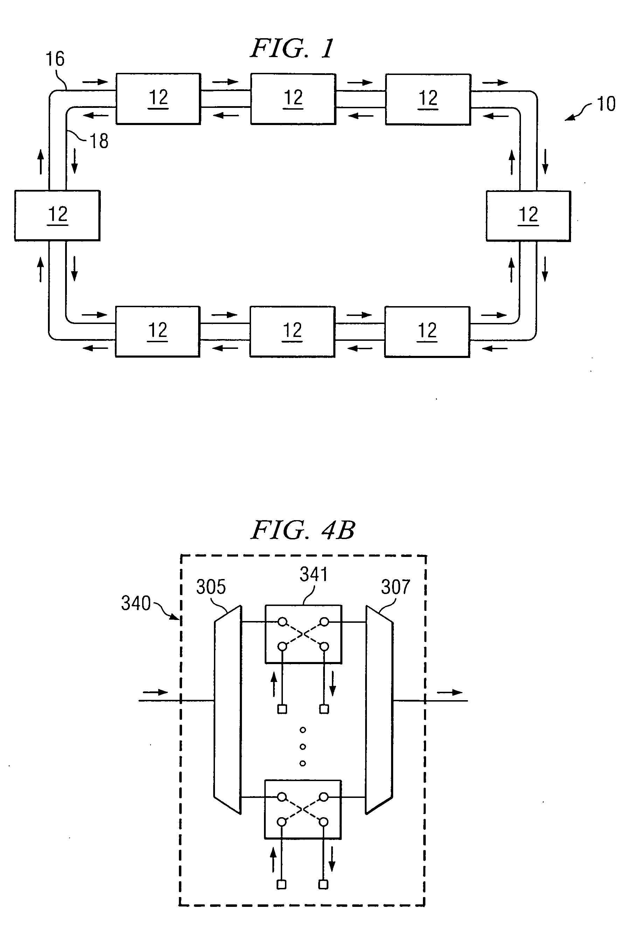

FIGURE 1 is a block diagram illustrating an optical network 10, in accordance with a particular embodiment of the present invention. In accordance with this embodiment, network 10 is an optical ring. An optical ring may include, as appropriate, a single, unidirectional fiber, a single, bi-directional fiber or a plurality of uni- or bi-directional fibers. In the illustrated embodiment, network 10 includes a pair of unidirectional fibers, each transporting traffic in opposite directions, specifically a first fiber, or ring, 16 and a second fiber, or ring, 18. Rings 16 and 18 connect a plurality of nodes 12. Network 10 is an optical network in which a number of optical channels are carried over a common path in disparate wavelengths/channels. Network 10 may be an wavelength division multiplexing (WDM), dense wavelength division multiplexing (DWDM) or other suitable multi-channel network. Network 10 may be used as a short-haul metropolitan network, a long-haul inter-city network or any other suitable network or combination of networks. In particular embodiments, nodes 12 may comprise a combination of one or more coupler nodes, sub-band nodes or hub nodes, as further described below. For example, in some embodiments network 10 may comprise a hub node, a coupler node and a plurality of sub-band nodes. While eight nodes 12 are illustrated in network 10, network 10 may include fewer or greater than eight nodes in other embodiments. In some embodiments, a single node 12 may comprise a combination of coupler node hardware, sub-band node hardware or hub node hardware, as further discussed below. Such combination may increase the number of ports through which optical traffic may be added and dropped from network 10. Moreover, the combination of hardware from different types of nodes into a single node may also reduce the need for certain hardware components, such as erbium-doped fiber amplifiers.

Referring to FIGURE 1, optical information signals are transmitted in different directions on rings 16 and 18. The optical signals have at least one characteristic modulated to encode audio, video, textual, real-time, non-real-time and/or other suitable data. Modulation may be based on phase shift keying (PSK), intensity modulation (IM) and other suitable methodologies.

In the illustrated embodiment, the first ring 16 is a clockwise ring in which traffic is transmitted in a clockwise direction. The second ring 18 is a counterclockwise ring in which traffic is transmitted in a counterclockwise direction. Nodes 12 are each operable to passively add and drop traffic to and from rings 16 and 18. In particular, each node 12 receives traffic from local clients and adds that traffic to rings 16 and 18. At the same time, each node 12 receives traffic from the rings 16 and 18 and drops traffic destined for the local clients. As used throughout this description and the following claims, the term "each" means every one of at least a subset of the identified items. In adding and dropping traffic, nodes 12 may combine data from clients for transmittal in the rings 16 and 18 and may drop channels of data from the rings 16 and 18 for clients. Traffic may be dropped by making the traffic available for transmission to the local clients. Thus, traffic may be dropped and yet continue to circulate on a ring. Nodes 12 communicate the traffic on rings 16 and 18 regardless of the channel spacing of the traffic - thus providing "flexible" channel spacing in nodes 12. "Passively" in this context means the adding or dropping of channels without power, electricity and/or moving parts. An active device would thus use power, electricity or moving parts to perform work. In a particular embodiment of the present invention, traffic may be passively added to and/or dropped from the rings 16 and 18 by splitting and/or combining, which is without multiplexing/demultiplexing in the transport rings and/or separating parts of a signal in the ring.

Signal information such as wavelengths, power and quality parameters may be monitored in nodes 12 and/or by a centralized control system. Thus, nodes 12 may provide for circuit protection in the event of a line cut or other interruption in one or both of the rings 16 and 18. An optical supervisory channel (OSC) may be used by the nodes to communicate with each other and with the control system. In particular embodiments, network 10 may be an Optical Unidirectional Path-Switched Ring (OUPSR) network in which traffic sent from a first node 12 to a second node 12 is communicated from the first node to the second node over both rings 16 and 18. The second node may include components allowing the second node to select between the traffic arriving via rings 16 and 18 so as to forward to a local client(s) the traffic from the ring that has a lower bit error rate (BER), a higher power level and/or any other appropriate and desirable characteristics. Alternatively, such components may select traffic from a designated ring unless that traffic falls below/above a selected level of one or more operating characteristics (in which case, traffic from the other ring may be selected). The use of such dual signals provides OUPSR protection or the allowance of traffic to be communicated from a first node 12 to a second node 12 over at least one of the rings 16 and 18 in the event of a line break or other damage to the other of the rings 16 and 18.

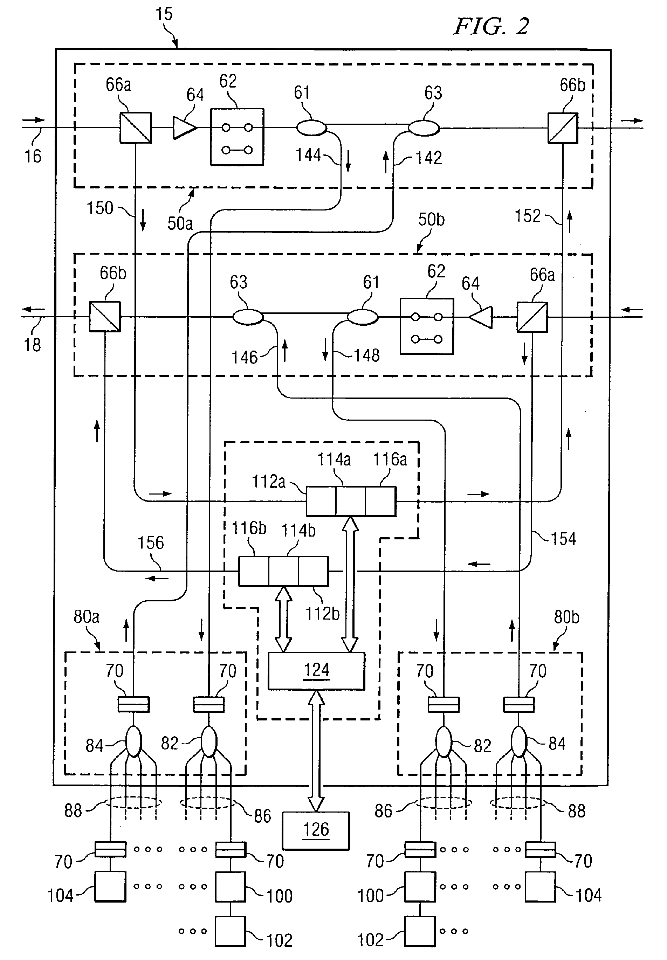

FIGURE 2 is a block diagram illustrating details of a coupler node 15, in accordance with one embodiment of the present invention. Coupler node 15 is one type of node which may be used as one or more of nodes 12 of FIGURE 1. Referring to FIGURE 2, coupler node 15 comprises counterclockwise transport element 50a, clockwise transport element 50b, counterclockwise distributing/combining element 80a, clockwise distributing/combining element 80b and managing element 110. In one embodiment, the elements 50, 80, and 110, as well as components within the elements may be interconnected with optical fiber links. In other embodiments, the components may be implemented in part or otherwise with planar waveguide circuits and/or free space optics. Any other suitable connections may alternatively be used. In addition, the elements of coupler node 15 may each be implemented as one or more discrete cards within a card shelf of coupler node 15. Exemplary connectors 70 for a card shelf embodiment are illustrated by FIGURE 2. The connectors 70 may allow efficient and cost effective replacement of failed components. It will be understood that additional, different and/or other connectors may be provided as part of coupler node 15. Coupler node 15 drops and continues all optical traffic passing through the node on rings 15 and 18, provided that switches of the transport elements of the node are in a pass-through state, as further discussed below.

Transport elements 50 are positioned "in-line" on rings 16 and 18. Transport elements 50 may comprise either a single add/drop coupler or a plurality of add/drop couplers which allow for the passive adding and dropping of traffic. In the illustrated embodiment, transport elements 50 each include a drop coupler 61 and an add coupler 63. Although couplers 61 and 63 are described, any other suitable optical splitters may be used. For the purposes of this description and the following claims, the terms "coupler," "splitter" and "combiner" should each be understood to include any device which receives one or more input optical signals, and either splits or combines the input optical signal(s) into one or more output optical signals.

Transport elements 50 may comprise ring switches 62 which may be 2 x 2 switches or other suitable switch elements operable to selectively open the connected ring 16 or 18. In the 2 x 2 embodiment, switch 62 includes a "cross" or open position and a "through" or closed position. The open position allows the ring openings in coupler node 15 to be selectively reconfigured to avoid channel interference in the optical network and to help provide protection switching.

Transport elements 50 further comprise OSC filters 66 at the ingress and egress edges of each element and an amplifier 64 between the ingress OSC filter 66a and the egress OSC filter 66b. Amplifiers 64 may comprise an erbium-doped fiber amplifier (EDFA) or other suitable amplifier. OSC filters 66 may comprise thin film type, fiber grating or other suitable type filters. It should be understood that transport elements in other embodiments, for coupler nodes or any other type of nodes, may include additional or fewer components than those illustrated and described in transport element 50. Moreover, other node components may be considered a part of the transport elements.

Distributing/combining elements 80 may each comprise a drop signal splitter 82 and an add signal combiner 84. Splitters 82 may comprise a coupler with one optical fiber ingress lead and a plurality of optical fiber egress leads which serve as drop leads 86. Drop leads 86 may be connected to one or more filters 100 which in turn may be connected to one or more drop optical receivers 102. In particular embodiments in which four drop leads 86 are implemented, splitters 82 may each comprise a 2 x 4 optical coupler, where one ingress lead is terminated, the other ingress lead is coupled to a drop coupler 61 via a fiber segment, and the four egress leads are used as the drop leads 86. Although the illustrated embodiment shows four drop leads 86, it should be understood that any appropriate number of drop leads 86 may implemented, as described in further detail below.

Combiners 84 similarly may comprise a coupler with multiple optical fiber ingress leads, which serve as add leads 88, and one optical fiber egress lead. Add leads 88 may be connected to one or more add optical transmitters 104. In particular embodiments in which four add leads 88 are implemented, combiners 84 may each comprise a 2 x 4 optical coupler, where one ingress lead is terminated, the other ingress lead is coupled to a coupler via a fiber segment, and the four egress leads are used as the add leads 88. Although the illustrated embodiment shows four add leads 88, it should be understood that any appropriate number of add leads 88 may implemented, as described in further detail below. To connect couplers 61 and 63 to splitters 82 and combiners 84, respectively, coupler node 15 further comprises counterclockwise add fiber segment 142, counterclockwise drop fiber segment 144, clockwise add fiber segment 146 and clockwise drop fiber segment 148.

Managing element 110 may comprise OSC receivers 112, OSC interfaces 114, OSC transmitters 116 and an element management system (EMS) 124. Coupler node 15 also comprises OSC fiber segments 150, 152, 154 and 156 that connect managing element 110 to ingress and egress OSC filters 66. Each OSC receiver 112, OSC interface 114 and OSC transmitter 116 set forms an OSC unit for one of the rings 16 or 18 in coupler node 15. The OSC units receive and transmit OSC signals for EMS 124. EMS 124 may be communicably coupled to a network management system (NMS) 126. NMS 126 may reside within coupler node 15, in a different node, or external to all of the nodes 12.

EMS 124 and/or NMS 126 may comprise logic encoded in media for performing network and/or node monitoring, failure detection, protection switching and loop back or localized testing functionality of the network. Logic may comprise software encoded in a disk or other computer-readable medium and/or instructions encoded in an application-specific integrated circuit (ASIC), field programmable gate array (FPGA) or other processor or hardware. It will be understood that functionality of EMS 124 and/or NMS 126 may be performed by other components of the network and/or be otherwise distributed or centralized. For example, operation of NMS 126 may be distributed to the EMS 124 of the nodes, and NMS 126 may thus be omitted as a separate, discrete element. Similarly, the OSC units may communicate directly with NMS 126 and EMS 124 omitted.

In operation, transport elements 50 are operable to passively add traffic to rings 16 and 18 and to passively drop traffic from rings 16 and 18. Transport elements 50 are further operable to passively add and drop the OSC signal to and from rings 16 and 18. More specifically, each OSC ingress filter 66a processes an ingress optical signal from its respective ring 16 or 18. OSC filters 66a filters the OSC signal from the optical signal and forwards the OSC signal to its respective OSC receiver 112. Each OSC filter 66a also forwards or lets pass the remaining transport optical signal to the associated amplifier 64. Amplifier 64 amplifies the signal and forwards the signal to its associated drop coupler 61.

Each drop coupler 61 passively splits the signal from the amplifier 64 into two generally identical signals: a through signal that is forwarded to egress OSC filter 66b (after being combined with add traffic, as described below), and a drop signal that is forwarded to the associated distributing/combining element 80. The split signals are copies in that they are identical or substantially identical in content, although power and/or energy levels may differ. Each add coupler 63 passively combines the through signal with an add signal comprising add traffic from the associated distributing/combining element 80. The combined signal is forwarded from the add coupler 63 to its associated OSC egress filter 66b. Particular embodiments may include couplers that work for both adding and dropping to be very low-loss and simple.

Each OSC egress filter 66b adds an OSC signal from the associated OSC transmitter 116 to the combined optical signal and forwards the new combined signal as an egress transport signal to the associated ring 16 or 18 of network 10. The added OSC signal may be locally generated data or may be received OSC data forwarded through by the EMS 124.

Prior to being forwarded to add couplers 63, locally-derived add traffic (from local clients or subscribers, from another network, or from any other appropriate source) is received at a distributing/combining element 80 from one or more of optical transmitters 104. One or more of optical transmitters 104 may include one or more components for adjusting the optical output power from the transmitter 104, such as a manual variable optical attenuator. Traffic to be added to ring 18 is received at distributing/combining element 80a, and traffic to be added to ring 16 is received at distributing/combining element 80b. These received signals are able to be used as monitors. A separate optical transmitter 104 may be used for each wavelength/channel in which traffic is to be added at a coupler node 15. Furthermore, each add lead 88 may be associated with a different wavelength/channel. Therefore, there may be a transmitter 104 and add lead 88 combination for each separate channel in which traffic is desired to be added at a particular coupler node 15. Although four add leads 88 for each ring 16 and 18 are illustrated (although four transmitters 104 are not explicitly illustrated), it will be understood that any appropriate number of optical transmitters 104 and associated add leads 88 may be used.

Add traffic from one or more transmitters 104 associated with a particular distributing/combining element 80 is received at the associated combiner 84. The combiner 84 combines the signals from multiple transmitters 104 (if applicable) and forwards the combined add signal to the associated add coupler 63 for addition to the associated ring 16 or 18. As described above, this add traffic is then combined with forwarded traffic at add coupler 63. Combiner 84 may be a coupler, a multiplexer, or any other suitable device.

In particular embodiments, distributing/combining elements 80a and 80b can share a set of transmitters 104. In such a case, the add signals generated by a particular optical transmitter 104 (add signals in a particular channel/wavelength) may be communicated to the combiner 84 of both distributing/combining element 80a and distributing/combining element 80b. Thus, the same traffic is added to rings 16 and 18 by coupler node 15.

As described above, locally-destined traffic on a ring 16 or 18 is dropped to the associated distributing/combining element 80 using drop coupler 61. The drop traffic is received at the splitter 82 of the distributing/combining element 80, and the splitter 82 splits the dropped signal into multiple generally identical signals and forwards each signal to an optical receiver 102 via a drop lead 86. In particular embodiments, the signal received by optical receivers 102 may first be filtered by an associated filter 100. Filters 100 may be implemented such that each filter allows a different channel to be forwarded to its associated receiver 102. Filters 100 may be tunable filters (such as an acousto-optic tunable filter) or other suitable filters, and receivers 102 may be broadband receivers or other suitable receivers. Such a configuration allows each receiver 102 associated with a particular ring 16 or 18 to receive a different wavelength and to forward the information transmitted in that wavelength to appropriate clients. A dropped optical signal passing through a filter 100 is able to be optically forwarded to a client without signal regeneration if the signal does not require such regeneration.

As mentioned above, coupler node 15 also provides an element management system. EMS 124 monitors and/or controls all elements in the node. In particular, EMS 124 receives an OSC signal from each ring 16 and 18 in an electrical format via an OSC receiver 112 associated with that ring (the OSC receiver 112 obtains the signal via an OSC filter 66a). EMS 124 may process the signal, forward the signal and/or loop-back the signal. Thus, for example, EMS 124 is operable to receive the electrical signal and resend the OSC signal via OSC transmitter 116 and OSC filter 66b to the next node on the ring 16 or 18, adding, if appropriate, node-specific error information or other suitable information to the OSC.

In one embodiment, each element in a node monitors itself and generates an alarm signal to EMS 124 when a failure or other problem occurs. For example, EMS 124 in coupler node 15 may receive one or more of various kinds of alarms from the elements and components in coupler node 15: an amplifier loss-of-light (LOL) alarm, an amplifier equipment alarm, an optical receiver equipment alarm, optical transmitter equipment alarm, or other alarms. Some failures may produce multiple alarms. For example, a fiber cut may produce amplifier LOL alarms at adjacent nodes and also error alarms from the optical receivers. In addition, EMS 124 may monitor the wavelength and/or power of the optical signal within a node using an optical spectrum analyzer (OSA) communicably connected to appropriate fiber segments within the node and to EMS 124.

NMS 126 collects error information from all of the nodes in the network and is operable to analyze the alarms and determine the type and/or location of a failure. Based on the failure type and/or location, NMS 126 determines needed protection switching actions for the network. The protection switch actions may be carried out by NMS 126 by issuing instructions to the EMS in the nodes.

Error messages may indicate equipment failures that may be rectified by replacing the failed equipment. For example, a failure of an optical receiver or transmitter may trigger an optical receiver equipment alarm or an optical transmitter equipment alarm, respectively, and the optical receiver or transmitter replaced as necessary.

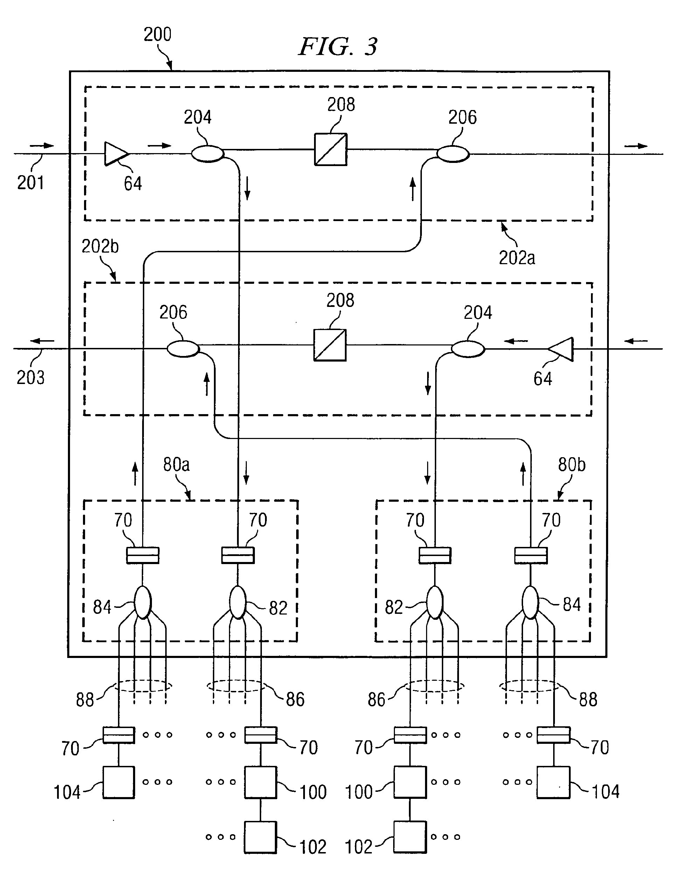

FIGURE 3 is a block diagram illustrating details of a sub-band node 200, in accordance with one embodiment of the present invention. Sub-band node 200 is one type of node which may be used as one or more of nodes 12 of FIGURE 1. Referring to FIGURE 3, optical rings 201 and 203 pass through sub-band node 200. Sub-band node 200 comprises counterclockwise transport element 202a, clockwise transport element 202b, counterclockwise distributing/combining element 80a and clockwise distributing/combining element. Particular embodiments may include a sub-band node with element and network managing systems coupled to OSC filters, as discussed above with respect to coupler node 15 of FIGURE 2.

In the illustrated embodiment, transport elements 202 each comprises drop couplers 204 and add couplers 206 which allow for the passive dropping and adding, respectively, of traffic. Transport elements 202 also each includes sub-band rejection filters 208 which block a particular sub-band of optical traffic from passing through the transport elements. A sub-band is a portion of the bandwidth of the network. Each sub-band may carry none, one or a plurality of traffic channels. The traffic channels may be flexibly spaced within the sub-band. Traffic in sub-bands not rejected is passed through to other components of the network. Such passed-through traffic may be rejected at another node in the network. The rejection of a particular sub-band by rejection filters 208 enables traffic in such sub-band to be added and dropped at node 200 without interference with traffic in the sub-band being communicated on the network. Traffic in the sub-band rejected by sub-band filters 208 may be dropped from the network by couplers 204, and added to the network at couplers 206. Transport elements 202 also include amplifiers 64.

Sub-band node 200 also includes additional elements as previously described with respect to coupler node 15 of FIGURE 2, such as distributing/combining elements 80. Locally-derived add traffic is received at distributing/combining elements 80 from one or more of optical transmitters 104. Locally-destined traffic on a ring 201 or 203 is dropped to the associated distributing/combining element 80 and forwarded to one or more optical receivers 102.

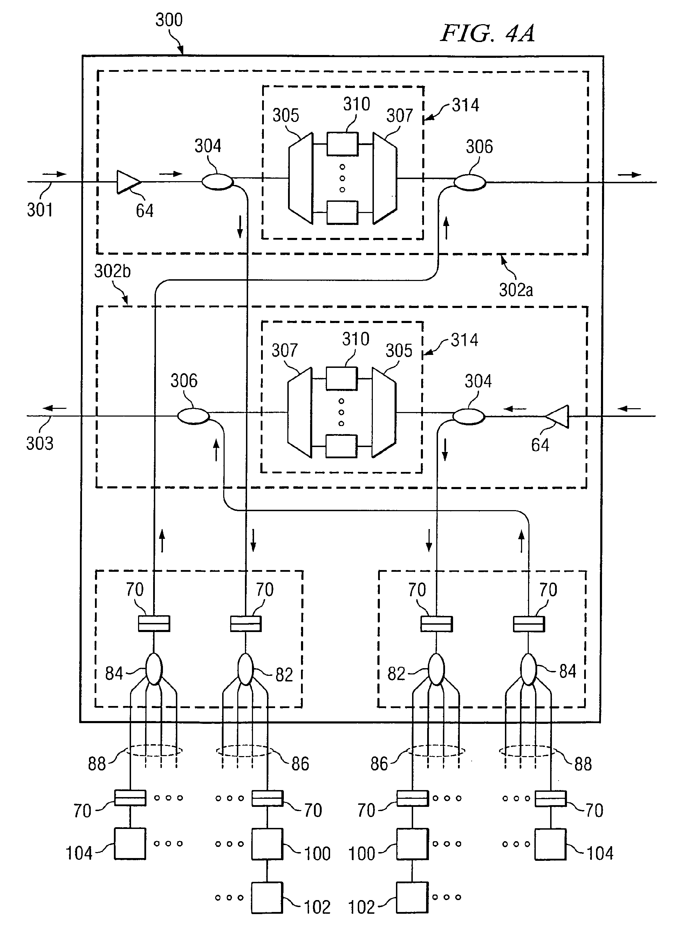

FIGURE 4 illustrates a hub node 300, in accordance with one embodiment of the present invention. Hub node 300 is one type of node that may be used as one or more of nodes 12 of FIGURE 1. Referring to FIGURE 4, optical rings 301 and 303 pass through hub node 300. Hub node 300 comprises counterclockwise transport element 302a and clockwise transport element 302b. Particular embodiments may include a hub node with element and network managing systems coupled to OSC filters, as discussed above with respect to coupler node 15 of FIGURE 2.

In the illustrated embodiment, transport elements 302 each comprises drop couplers 304 and add couplers 306 which allow for the passive dropping and adding, respectively, of traffic. Transport elements also each includes mux/demux units 314. Mux/demux units 314 may each comprise demultiplexer 305, multiplexer 307 and switch elements which may comprise an array of switches 310 or other components, such as wavelength or sub-band blockers, operable to selectively pass or terminate a traffic channel or sub-band. In a particular embodiment, multiplexers 307 and demultiplexers 305 may comprise arrayed waveguides. In another embodiment, multiplexers 307 and demultiplexers 305 may comprise fiber Bragg gratings. Switches 310 may comprise 2 x 2 or other suitable switches or optical cross-connects operable to terminate the demultiplexed traffic channels or sub-bands. Transport elements 302 also include amplifiers 64.

In operation, counterclockwise transport element 302a receives a WDM signal comprising a plurality of channels from ring 301. Demultiplexer 305 demultiplexes the optical signal into its constituent channels or sub-bands. Switches 310 selectively forward or terminate channels or sub-bands to multiplexer 307. Multiplexer 307 multiplexes the channels or sub-bands into one optical signal for communication through ring 301. Clockwise transport segment 302b receives an optical signal from ring 303. Demultiplexer 305 demultiplexes the optical signal into its constituent channels or sub-bands. Switches 310 selectively forward or terminate channels or sub-bands to multiplexer 307. Multiplexer 307 multiplexes the channels or sub-bands into one optical signal for communication through ring 303.

Hub node 300 also includes additional elements as previously described with respect to coupler node 15 of FIGURE 2, such as distributing/combining elements 80. Locally-derived add traffic is received at distributing/combining elements 80 from one or more of optical transmitters 104. Locally-destined traffic on a ring 301 or 303 is dropped to the associated distributing/combining element 80 and forwarded to one or more optical receivers 102.

FIGURE 4B is a block diagram illustrating a mux/demux unit of hub node 300 of FIGURE 4A, in accordance with another embodiment of the present invention. In accordance with this embodiment, mux/demux unit 340 of FIGURE 4B may be substituted for mux/demux modules 314 of FIGURE 4A. Mux/demux unit 340 comprises demultiplexer 305 and multiplexer 307 as described above in reference to FIGURE 4A. In place of the plurality of switches 310 of mux/demux unit 314 of FIGURE 4A are a plurality of 2 x 2 switches 341. Switches 341 allow for the opening of rings 301 and 303 for a particular channel or sub-band by switching the 2 x 2 switch to the "cross" position. Traffic may be added and/or dropped from rings 301 and 303 via the add and drop leads of 2 x 2 switches 341. Particular embodiments that utilize mux/demux unit 340 in a hub node may not include add and drop couplers in the transport elements of the node, since traffic may be added and dropped via add and drop leads of the switches.

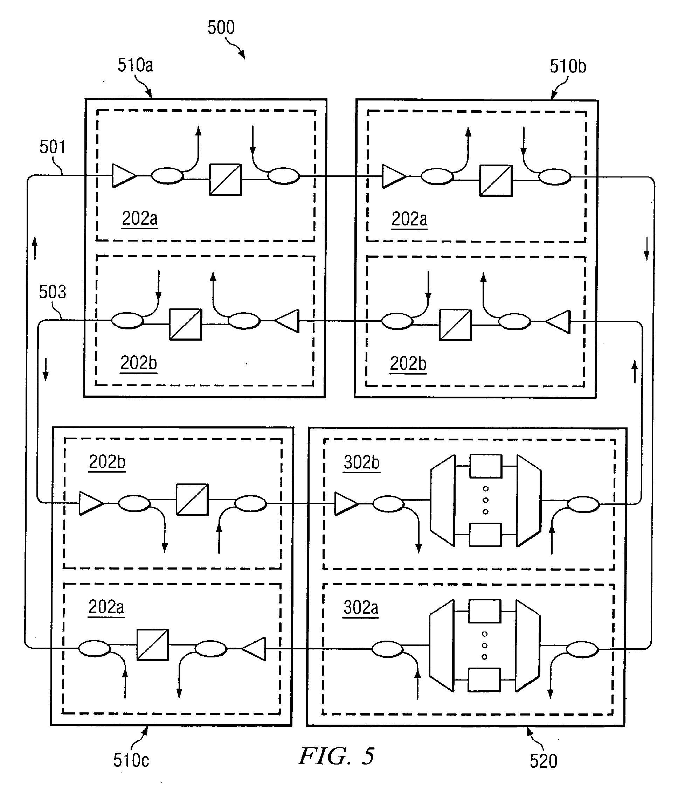

FIGURE 5 is a block diagram illustrating an optical network 500, in accordance with a particular embodiment of the present invention. Optical network 500 provides for the communication of optical traffic through rings 501 and 503. Optical network 500 includes sub-band nodes 510a-510c, similar to sub-band node 200 of FIGURE 3, and hub node 520, similar to hub node 300 of FIGURE 4. For ease of reference, only high-level details of transport elements of sub-band nodes 510 and hub node 520 are shown.

In the illustrated embodiment, each of sub-band nodes 510a-510c blocks a respective sub-band thus allowing for the adding and dropping of optical traffic in such respective sub-band while maintaining OUPSR protection between the nodes. Switches in hub node 520 for the sub-bands installed at sub-band nodes 510 may be in a pass-through position to allow for the communication of traffic in such sub-bands around the rings. Hub node 520 may provide for the adding and dropping of traffic in the remaining five sub-bands of the full C-band by terminating such sub-bands at its switches. OUPSR protection is still maintained between the nodes. Hub node 520 may also be used as a ring interconnect node to connect rings 501 and 503 to other optical components or rings. In particular embodiments, additional or fewer sub-band nodes 510 may be utilized. In such cases, the sub-bands added or dropped at hub node 520 may change based on the additional or fewer sub-band nodes 510 utilized. For example, if only two sub-band nodes are included in optical network 500, then hub-band node 520 may add and drop six sub-bands to utilize the full C-band in the network. When utilizing a hub node, a maximum number of nodes in a network may be N + 1 where N is the total number of installed sub-bands. While the illustrated embodiment includes three sub-band nodes and a single hub node, it should be understood that networks in accordance with other embodiments may include any combination of sub-band nodes and hub nodes.

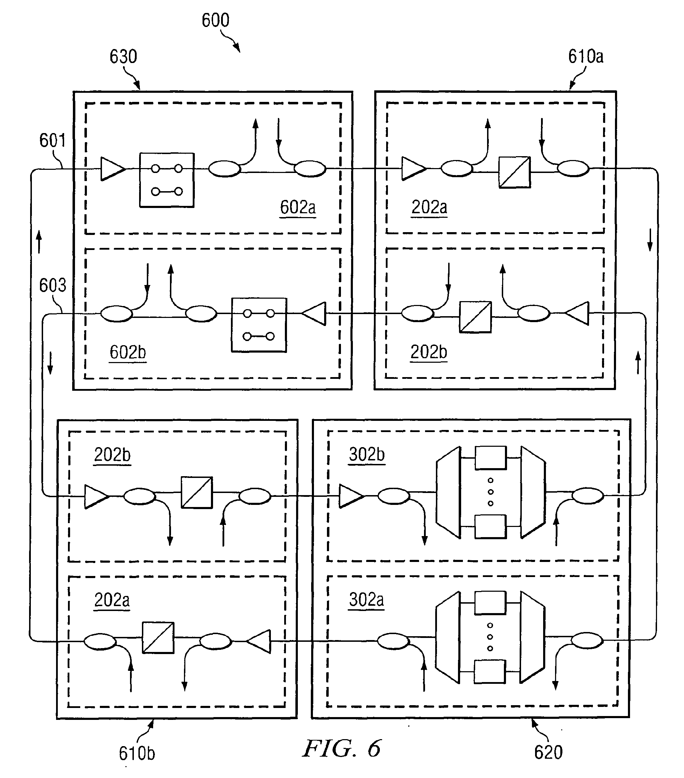

FIGURE 6 is a block diagram illustrating an optical network 600, in accordance with a particular embodiment of the present invention. Optical network 600 provides for the communication of optical traffic through rings 601 and 603. Optical network 600 includes sub-band nodes 610a-610b, hub node 620 and coupler node 630. For ease of reference, only high-level details of transport elements of sub-band nodes 610, hub node 620 and coupler node 630 are shown.

In the illustrated embodiment, each of sub-band nodes 610a-610b blocks a respective sub-band of optical traffic thus allowing for the adding and dropping of optical traffic in such respective sub-band. Switches in hub node 620 for the sub-bands installed at sub-band nodes 610 may be in a pass-through position to allow for the communication of traffic in such sub-bands around the rings. Hub node 620 may provide for the adding and dropping of traffic in one or more of the remaining six sub-bands of the full C-band by terminating such sub-bands at its switches.

Coupler node 630 passively adds and drops optical traffic as described above with respect to coupler node 15 of FIGURE 2. To add and drop such traffic, coupler node 630 includes transport elements 602 which are similar to transport elements 50 of coupler node 15 of FIGURE 2. The traffic added and dropped at coupler node 630 may include wavelengths within or outside of sub-bands already being added at other nodes, sub-band nodes 610 or hub node 620. The, use of a coupler node in a network that includes sub-band and hub nodes increases the maximum number of nodes which may otherwise be limited by the number of sub-bands to maintain OUPSR protection in the network. If the optical traffic added and dropped at coupler node 630 comprises only wavelengths outside of any installed sub-bands, then traffic between coupler node 630 and hub node 620 is OUPSR protected. If at least one sub-band is not utilized by sub-band nodes 610 or hub node 620 (e.g., rejected at a sub-band node 610 or blocked by switches of hub node 620), then coupler node 630 may add and drop traffic in channels of such sub-band while maintaining OUPSR protection between coupler node 630 and hub node 620. Particular embodiments may include the addition of more than one coupler node to an optical network comprising one or more sub-band and hub nodes. Particular embodiments may also utilize a coupler node in combination with one or more sub-band nodes even if a hub node is not utilized on the rings. While the illustrated embodiment includes two sub-band nodes, a coupler node and a hub node, it should be understood that networks in accordance with other embodiments may include any combination of sub-band nodes, coupler nodes and hub nodes.

Particular embodiments of the present invention also provide for the reuse of channels or sub-bands in a particular network. For example, if the hub-node switch for a sub-band installed at a particular node is "off," then the sub-band may be reused in the network between the hub node and the particular node at which the sub-band is installed. It should be noted, however, that traffic between the particular node and the hub node will not be OUPSR protected.

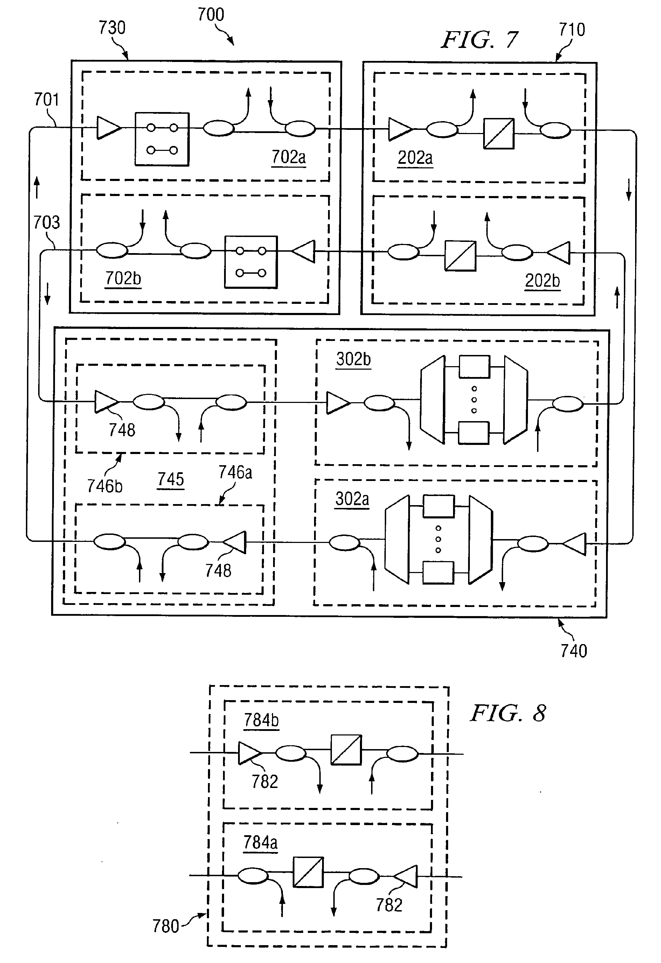

FIGURE 7 is a block diagram illustrating an optical network 700, in accordance with a particular embodiment of the present invention. Optical network 700 provides for the communication of optical traffic through rings 701 and 703. Optical network 700 includes sub-band node 710a, coupler node 730 and a combination hub node 740. For ease of reference, only high-level details of transport elements of the utilized nodes are shown.

In the illustrated embodiment, sub-band node 710 blocks a sub-band of optical traffic thus allowing for the adding and dropping of optical traffic in such respective sub-band. Switches in combination hub node 740 for the sub-band installed at sub-band node 710 may be in a pass-through position to allow for the communication of traffic in such sub-band around the rings.

Coupler node 730 passively adds and drops optical traffic as described above with respect to coupler node 15 of FIGURE 2. To add and drop such traffic, coupler node 730 includes transport elements 702 which are similar to transport elements 50 of coupler node 15 of FIGURE 2. The traffic added and dropped at coupler node 730 may include wavelengths within or outside of sub-bands already being added at other nodes, sub-band node 710 or combination hub node 740.

Combination hub node 740 combines components previously described with respect to coupler nodes and hub nodes into a single node. In doing so, the number of ports which may add and drop traffic from a single node is increased. Combination hub node 740 includes transport elements 302a and 302b described previously with respect to hub node 300 of FIGURE 4A. Thus, combination hub node 740 provides hub node functionality through the use of mux/demux units which may selectively termination particular channels or sub-bands of optical traffic. In the illustrated embodiment, combination hub node also includes coupler unit 745 which provides functionality of coupler nodes to network 700. Coupler unit 745 comprises transport elements 746 which are similar in function to transport elements of coupler nodes previously described. In particular embodiments, the combination of coupler unit 745 with the hub node functionality may alleviate the need for amplifiers 748 in the coupler node transport elements. Such amplifiers might otherwise be required in a typical coupler node independent from a hub node. The elimination of such amplifiers may considerably reduce the cost of the components of the node.

As discussed above, the combination of coupler node and hub node functionality may increase the number of ports available for adding and dropping traffic at the node. The protection schemes of the network with the resultant combination node may be similar to the protection schemes if the combined nodes were instead independent nodes.

FIGURE 8 illustrates a sub-band unit 780 which may be utilized in place of coupler unit 745 of FIGURE 7. Sub-band unit 780 includes transport elements 784 which are similar in functionality to transport elements described with respect to sub-band nodes, such as transport elements 202 of sub-band node 200 of FIGURE 3. If sub-band unit 780 is utilized in place of coupler unit 745 of combination hub node 740 of FIGURE 7, then the resultant combination hub node would provide both hub node and sub-band node functionality to optical network 700. The protection schemes of the network with the resultant combination node may be similar to the protection schemes if the combined nodes were instead independent nodes. As in the case with coupler unit 745, the use of sub-band unit 780 in combination hub node 740 may alleviate the need for amplifiers 782 in the transport elements of the sub-band unit, thus saving substantial hardware costs.

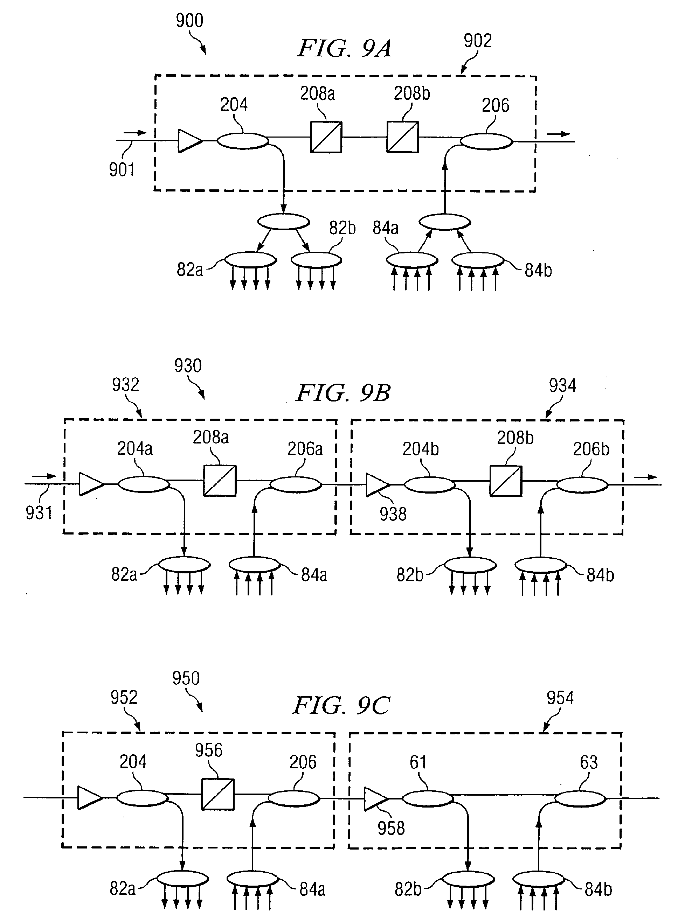

FIGURE 9A illustrates certain components of a combination sub-band node 900, in accordance with a particular embodiment of the present invention. Combination sub-band node 900 includes sub-band transport element 902 which, in this embodiment, includes two cascaded sub-band rejection filters 208a and 208b, each operable to block a respective sub-band of optical traffic communicated on ring 901. The use of multiple cascaded sub-band rejection filters operable to block respective sub-bands on a ring increases the number of add channels available for the adding of optical traffic. For example, since filters 208 collectively block two sub-bands, combiners 84a and 84b may each add optical traffic from clients in a respective sub-band. It should be understood that other embodiments may include another number of cascaded sub-band rejection filters.

FIGURE 9B illustrates certain components of a combination sub-band node 930, in accordance with a particular embodiment of the present invention. Combination sub-band node 930 includes sub-band transport elements 932 and 934 which each include a sub-band rejection filter 208 operable to block a respective sub-band of optical traffic. As in combination sub-band node 900 of FIGURE 9A, the ability to block multiple sub-bands on a ring increases the number of add and drop ports available for the adding and dropping of traffic while maintaining OUPSR protection. Moreover, the need for amplifier 938 may be eliminated in particular embodiments using the illustrated configuration.

FIGURE 9C illustrates certain components of a combination sub-band node 950, in accordance with a particular embodiment of the present invention. Combination sub-band node 950 includes a sub-band transport element 952 and a coupler transport element 954, both as described above with respect to other illustrated embodiments. Again, the cascading of these transport elements increases the number of add and drop ports available for the adding and dropping of traffic. Moreover, the need for amplifier 958 may be eliminated in this embodiment.

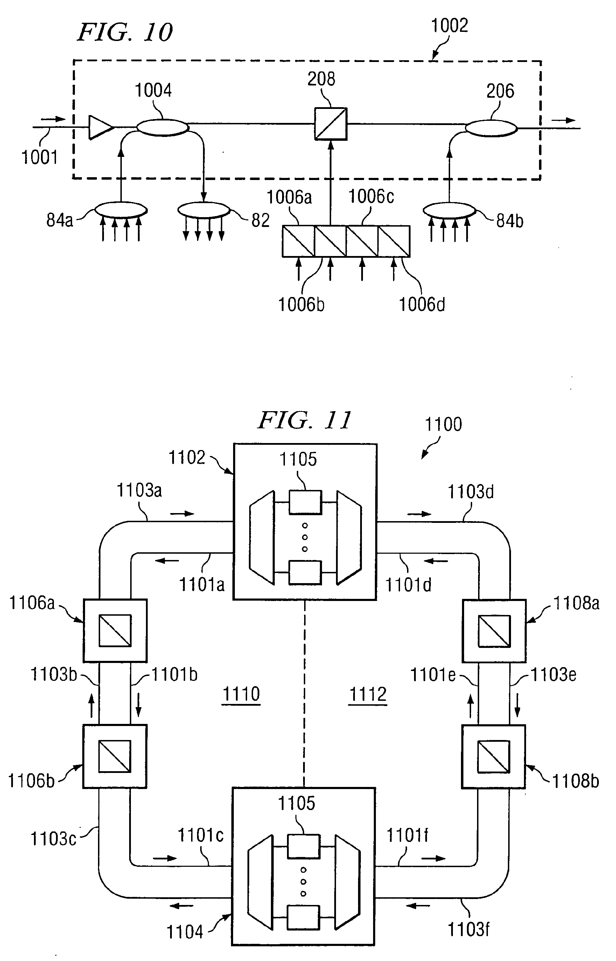

FIGURE 10 illustrates a transport element 1002 with a sub-band rejection filter 208, in accordance with a particular embodiment of the present invention. Transport element 1002 also includes a coupler 1004 which is a combination coupler operable to both add and drop traffic to and from ring 1001. In the illustrated embodiment, transport element 1002 includes an add coupler 206; however other embodiments may not include such coupler.

In this embodiment, sub-band rejection filter 208 is operable to add traffic to ring 1001 within the sub-band that it blocks. Such traffic is added through channel filters 1006a-1006d as illustrated. Each channel filter 1006 blocks traffic in a respective channel of the sub-band blocked by sub-band rejection filter 208. The use of transport element 1002 increases the number of add and drop ports used to add and drop traffic at a particular node. Transport element 1002 may be utilized in any suitable node on an optical ring. In particular embodiments, transport element 1002 may be cascaded with one or more other types of transport elements in an optical network. Components of transport element 1002 may also be combined with transport elements of other nodes discussed herein to form various types of combination nodes in particular embodiments.

While particular embodiments have described certain combinations of different types of nodes in an optical network, it should be understood that other embodiments may utilize other combinations. For example, the numbers of sub-band nodes, coupler nodes and hub nodes combined in a single ring network may be changed according to particular needs. Moreover, particular embodiments envision the combination of coupler node, sub-band node and/or hub node functionality in a single node in numerous ways other than those explicitly illustrated to increase the number of ports available to add and drop traffic at a node. For example, transport elements of sub-band nodes, hub nodes and coupler nodes may otherwise be combined and/or cascaded in a single node to increase the available network capacity.

FIGURE 11 illustrates an optical network 1100 with two hub nodes forming two photonic domains, in accordance with a particular embodiment of the present invention. Optical network 1100 includes optical rings 1101 and 1103. In this embodiment, optical ring 1103 is a clockwise ring, and optical ring 1101 is a counterclockwise ring. Optical network 1100 includes hub nodes 1102 and 1104 and sub-band nodes 1106a, 1106b 1108a and 1108b. Hub nodes 1102 and 1104 may be similar to other hub nodes discussed herein, such as hub node 300 of FIGURE 4A. In some embodiments hub nodes 1102 and 1104 may be sub-band based hub nodes such that mux/demux units of such hub nodes separate and either pass or terminate optical traffic according to sub-bands of the traffic, while in other embodiments hub nodes 1102 and 1104 may be channel based hub nodes such that mux/demux units of such hub nodes separate and either pass or terminate optical traffic according to individual channels of the traffic. Sub-band nodes 1106 and 1108 may be similar to other sub-band nodes discussed herein, such as sub-band node 200 of

### FIGURE 3.

The use of two hub-band nodes 1102 and 1104 divides optical network 1100 into two photonic domains 1110 and 1112. Each such domain includes network components in between hub nodes 1102 and 1104 on respective sides. For example, in this embodiment domain 1110 includes ring segments 1101a-1101c and 1103a-1103c and sub-band nodes 1106a-1106b, and domain 1112 includes ring segments 1101d-1101f and 1103d-1103f and sub-band nodes 1108-1108b. While the illustrated embodiment utilizes two hub-band nodes to form two domains of optical network 1100, it should be understood that other embodiments may include more than two hub nodes to form more than two domains of an optical network. Moreover, other embodiments may include a different number of sub-band nodes and/or other types of nodes, such as coupler nodes. For example, other embodiments may not include sub-band nodes with sub-band rejection filters. Some embodiments may include combination nodes or any other type of node, for example nodes having transport elements as described with respect to FIGURES 9A-9C and 10, in addition to multiple hub nodes.

In operation, traffic may be communicated through rings 1101 and 1103 as discussed above with respect to optical networks of other embodiments. Each sub-band node may terminate a respective sub-band of such traffic to enable the adding and dropping of traffic in such sub-band at the node without interference. Each hub node may selectively pass or terminate individual sub-bands or channels of the optical traffic using switches 1105. As described above with respect to other hub nodes, optical traffic entering the hub nodes is demultiplexed into its constituent channels or sub-bands, and switches 1105 selectively pass or terminate each constituent channel or sub-band. The passed traffic is then multiplexed into one traffic stream for communication through the network.

The use of two hub nodes enables traffic in certain sub-bands or channels communicated through network 1100 to be utilized in one or both domains 1110 and 1112. For example, hub nodes 1102 and 1104 may each selectively pass through optical traffic in one or more particular channels or sub-bands thus allowing traffic added and dropped at a particular sub-band node to be communicated to all nodes of network 1100.

However, both hub nodes 1102 and 1104 may also terminate optical traffic in one or more channels or sub-bands such that traffic added at a sub-band node of a particular domain will not be communicated to the nodes of the other domain. For example, if switches 1105 of hub nodes 1102 and 1104 are configured such that traffic in a certain channel does not pass through either hub node, then traffic added in that channel at sub-band node 1106a will not pass through either of hub nodes 1102 and 1104 such that the traffic will not be communicated to any nodes of domain 1112. Likewise in this scenario, traffic added in that same channel at sub-band node 1108a will not reach any nodes of domain 1110. It should be understood that switches 1105 of hub nodes 1102 and 1104 are reconfigurable such that traffic may be selectively terminated or passed depending on particular needs or circumstances. For example, as further discussed below, switches 1105 may be reconfigured to maintain protection of the network in the event of a fiber cut or other error that may prevent communication of traffic through at least a portion of the network. Such protection may ensure that certain nodes still receive certain traffic in the event of such fiber cut or error.

Since traffic in particular channels or sub-bands may be isolated within the domains in which it is added or dropped, then such channels or sub-bands may be reused to communicate traffic in the other domains of the network without interference. Thus, the use of multiple hub nodes forms separate photonic domains in which channels and sub-bands may be reused to communicate traffic in such domains. This ability to reuse channels and sub-bands increases capacity of the optical network. It should be noted that when network 1100 is providing OUPSR protection for traffic in a particular sub-bands or channels, then hub nodes 1102 and 1104 may pass such traffic to maintain the OUPSR protection. In this case, the particular sub-bands or channels passed by hub nodes 1102 and 1104 may not be reused since the traffic travels through both domains.

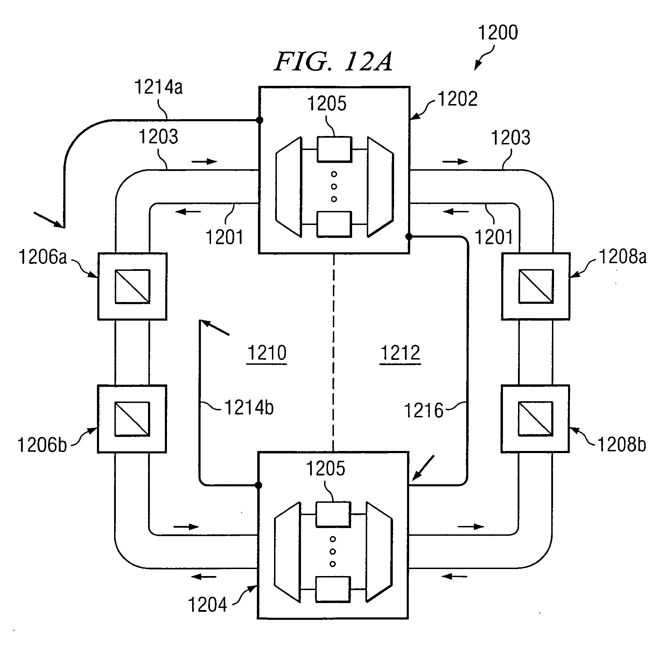

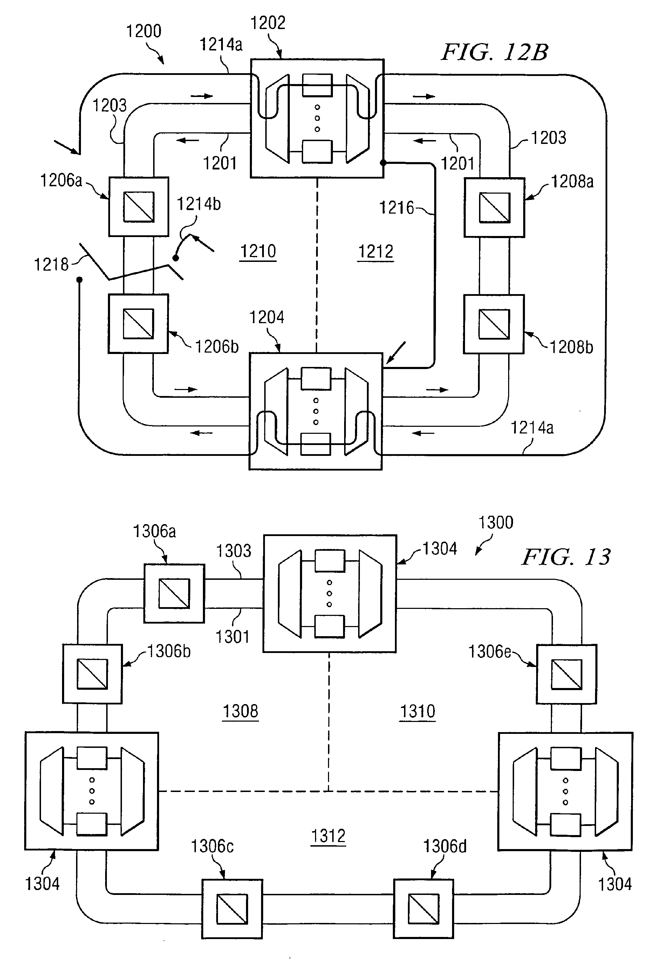

FIGURES 12A and 12B illustrate an example of optical shared path protection (OSPP) in an optical network 1200 with hub nodes 1202 and 1204, in accordance with a particular embodiment of the present invention. Like optical network 1100 of FIGURE 11, hub nodes of optical network 1200 divide the network into two photonic domains 1210 and 1212. Domain 1210 includes sub-band nodes 1206a and 1206b and segments of rings 1201 and 1203 coupled to such sub-band nodes, and domain 1212 includes sub-band nodes 1208a and 1208b and segments of rings 1201 and 1203 coupled to sub-band nodes 1208a and 1208b.

Referring to FIGURE 12A, as an example, traffic 1214 is added in a particular sub-band at sub-band node 1206a. Traffic 1214a travels on ring 1203, and traffic 1214b travels on ring 1201. Traffic 1214 may thus be used at sub-band node 1206a and hub nodes 1202 and 1204. The switches 1205 of hub nodes 1202 and 1204 applicable to the sub-band of traffic 1214 do not allow traffic 1214 to pass through the hub nodes to nodes 1208a and 1208b of domain 1212. Meanwhile traffic 1216 in the same sub-band of traffic 1214 may be communicated through domain 1212 without interference with traffic 1214. As an example, in the illustrated embodiment traffic 1216 in the same sub-band as traffic 1214 is added at hub node 1204 and communicated in the counterclockwise direction on ring 1201 to hub node 1202 for use by nodes of domain 1212 and hub nodes 1202 and 1204.

FIGURE 12B further illustrates the OSPPR scheme when a fiber cut 1218 occurs in domain 1210. Traffic 1214b on ring 1201 is stopped by fiber cut 1218 such that traffic 1214b does not reach sub-band node 1206b or hub node 1204. However, in this case, the switches 1205 of hub nodes 1202 and 1204 applicable to the sub-band of traffic 1214a may be reconfigured to allow such traffic to pass through hub nodes 1202 and 1204 in the clockwise direction around ring 1203 so that traffic 1214a reaches sub-band node 1206. In this scenario, the channels of the sub-band of traffic 1214 may still be reused, as represented by traffic 1216, in domain 1212 on ring 1201. It should be noted that while not specifically illustrated, before fiber cut 1218 occurs (and therefore before switches 1205 of hub nodes 1202 and 1204 are reconfigured to pass traffic 1214) the channels of the sub-band of traffic 1214 may be reused in domain 1212 on ring 1203 as well. While FIGURES 12A and 12B illustrate one example of OSPPR protection in a network having multiple domains formed by multiple hub nodes, it should be understood that networks having other configurations and other numbers of hub nodes may utilize similar protection schemes.

FIGURE 13 illustrates an optical network 1300 with three hub nodes 1304 forming three photonic domains, in accordance with a particular embodiment of the present invention. Optical network 1300 communicates traffic on rings 1301 and 1303. Network 1300 also includes sub-band nodes 1306. The use of three hub nodes 1304 forms three photonic domains 1308, 1310 and 1312. Domain 1308 includes sub-band nodes 1306a and 1306b and segments of rings 1301 and 1303 coupled to such sub-band nodes. Domain 1310 includes sub-band node 1306e segments of rings 1301 and 1303 coupled to such sub-band node. Domain 1312 includes sub-band nodes 1306c and 1306d and segments of rings 1301 and 1303 coupled to such sub-band nodes. As described above with respect to other embodiments with multiple hub nodes, the formation of photonic domains enables channels and sub-bands to be reused in different domains thus increasing capacity of the network. In particular embodiments, network 1300 may still be able to maintain OSPPR protection during such reuse. Other embodiments may include another number of hub nodes forming another number of photonic domains.

Although the present invention has been described in detail with reference to particular embodiments, it should be understood that various other changes, substitutions, and alterations may be made hereto without departing from the spirit and scope of the present invention. For example, although the present invention has been described with reference to a number of elements included within coupler nodes, sub-band nodes and hub nodes, these elements may be combined, rearranged or positioned in order to accommodate particular routing architectures or needs. The present invention contemplates great flexibility in the arrangement of these elements as well as their internal components.

Numerous other changes, substitutions, variations, alterations and modifications may be ascertained by those skilled in the art and it is intended that the present invention encompass all such changes, substitutions, variations, alterations and modifications as falling within the spirit and scope of the appended claims. Moreover, the present invention is not intended to be limited in any way by any statement in the specification that is not otherwise reflected in the claims.

## Claims

1. An optical network, comprising:
an optical ring operable to communicate optical traffic;
a plurality of nodes coupled to the optical ring, each node operable to passively add and drop one or more traffic streams to and from the optical ring, each traffic stream comprising at least one channel; and
the plurality of nodes comprising:
a hub node operable to selectively pass or terminate a plurality of individual sub-bands of the optical traffic; and
a plurality of sub-band nodes each operable to terminate a respective sub-band of the optical traffic.

2. The optical network of Claim 1, wherein the plurality of nodes further comprises a coupler node operable to drop and continue optical traffic passing through the coupler node.

3. The optical network of Claim 1, wherein the hub node comprises:
a demultiplexer operable to demultiplex the optical traffic into its constituent sub-bands;
a plurality of switches each operable to pass or terminate a respective sub-band; and
a multiplexer operable to multiplex each sub-band passed at the plurality of switches for communication on the optical ring.

4. The optical network of Claim 3, wherein the demultiplexer and the multiplexer comprise array waveguides.

5. The optical network of Claim 1, wherein the plurality of sub-band nodes each comprise a sub-band filter operable to block optical traffic in a respective sub-band.

6. The optical network of Claim 1, further comprising a combination sub-band node operable to terminate a plurality of sub-bands of the optical traffic.

7. The optical network of Claim 6, wherein the combination sub-node comprises a plurality of cascaded sub-band filters each operable to block optical traffic-in a respective sub-band.

8. An optical network, comprising:
an optical ring operable to communicate optical traffic;
a plurality of nodes coupled to the optical ring, each node comprising at least one transport element operable to passively add and drop one or more traffic streams to and from the optical ring, each traffic stream comprising at least one channel; and
the plurality of nodes comprising a combination node, the combination node comprising:
a coupler node transport element operable to drop and continue optical traffic passing through the coupler node transport element; and
a hub node transport element cascaded with the coupler node transport element, the hub node transport element operable to selectively pass or terminate a plurality of individual sub-bands of the optical traffic.

9. The optical network of Claim 8, wherein the plurality of nodes further comprise a plurality of sub-band nodes each operable to terminate a respective sub-band of the optical traffic.

10. The optical network of Claim 8, wherein the hub node transport element comprises
a demultiplexer operable to demultiplex the optical traffic into its constituent sub-bands;
a plurality of switches each operable to pass or terminate a respective sub-band; and
a multiplexer operable to multiplex each sub-band passed at the plurality of switches for communication on the optical ring.

11. The optical network of Claim 10, wherein the demultiplexer and the multiplexer comprise array waveguides.

12. An optical network, comprising:
an optical ring operable to communicate optical traffic;
a plurality of nodes coupled to the optical ring, each node comprising at least one transport element operable to passively add and drop one or more traffic streams to and from the optical ring, each traffic stream comprising at least one channel; and
the plurality of nodes comprising a combination node, the combination node comprising:
a sub-band node transport element operable to terminate a respective sub-band of the optical traffic; and
a hub node transport element cascaded with the sub-band node transport element, the hub node transport element operable to selectively pass or terminate a plurality of individual sub-bands of the optical traffic.

13. The optical network of Claim 12, wherein the plurality of nodes further comprise a plurality of sub-band nodes each operable to terminate a respective sub-band of the optical traffic.

14. The optical network of Claim 12, wherein the hub node transport element comprises
a demultiplexer operable to demultiplex the optical traffic into its constituent sub-bands;
a plurality of switches each operable to pass or terminate a respective sub-band; and
a multiplexer operable to multiplex each sub-band passed at the plurality of switches for communication on the optical ring.

15. The optical network of Claim 14, wherein the demultiplexer and the multiplexer comprise array waveguides.

16. A method for communicating traffic on an optical network, comprising:
communicating traffic through an optical ring;
passively adding and dropping one or more traffic streams to and from the optical ring at a plurality of nodes coupled to the optical ring, each traffic stream comprising at least one channel;
selectively passing or terminating a plurality of individual sub-bands of the optical traffic at a hub node of the plurality of nodes; and
terminating a plurality of sub-bands of the optical traffic at a plurality of sub-band nodes of the plurality of nodes, each of the plurality of sub-band nodes terminating a respective sub-band.

17. The method of Claim 16, further comprising dropping and continuing optical traffic passing through a coupler node of the plurality of nodes.

18. The method of Claim 16, further comprising:
demultiplexing the optical traffic into its constituent sub-bands at the hub node;
passing or terminating a plurality of sub-bands using a plurality of switches, each of the plurality of switches passing or terminating a respective sub-band; and
multiplexing at the hub node each sub-band passed at the plurality of switches for communication on the optical ring.

19. The method of Claim 18, wherein:
demultiplexing the optical traffic comprises demultiplexing the optical traffic with an array waveguide; and
multiplexing each sub-band passed at the plurality of switches comprises multiplexing each sub-band passed at the plurality of switches with an array waveguide.

20. The method of Claim 16, wherein terminating a plurality of sub-bands of the optical traffic at a plurality of sub-band nodes comprises blocking a plurality of sub-bands of the optical traffic at a plurality of sub-band nodes using a plurality of sub-band filters.

21. The method of Claim 16, further comprising terminating a plurality of sub-bands of the optical traffic at a combination sub-band node.

22. The method of Claim 21, wherein terminating a plurality of sub-bands of the optical traffic at a combination sub-band node comprises terminating a plurality of sub-bands of the optical traffic at a combination sub-band node using a plurality of cascaded sub-band filters, each blocking optical traffic in a respective sub-band.

23. An optical network, comprising:
an optical ring operable to communicate optical traffic;
a plurality of nodes coupled to the optical ring, each node operable to passively add and drop one or more traffic streams to and from the optical ring, each traffic stream comprising at least one channel; and
the plurality of nodes comprising:
a hub node operable to selectively pass or terminate a plurality of individual channels of the optical traffic; and
a plurality of sub-band nodes each operable to terminate a respective sub-band of the optical traffic.

24. The optical network of Claim 23, wherein the plurality of nodes further comprises a coupler node operable to drop and continue optical traffic passing through the coupler node.

25. The optical network of Claim 23, wherein the hub node comprises:
a demultiplexer operable to demultiplex the optical traffic into its constituent channels;
a plurality of switches each operable to pass or terminate a respective channel; and
a multiplexer operable to multiplex each channel passed at the plurality of switches for communication on the optical ring.

26. The optical network of Claim 23, wherein the plurality of sub-band nodes each comprise a sub-band filter operable to block optical traffic in a respective sub-band.

27. The optical network of Claim 23, further comprising a combination sub-band node operable to terminate a plurality of sub-bands of the optical traffic.

28. The optical network of Claim 27, wherein the combination sub-node comprises a plurality of cascaded sub-band filters each operable to block optical traffic in a respective sub-band.

29. An optical network, comprising:
an optical ring operable to communicate optical traffic;
a plurality of nodes coupled to the optical ring, each node comprising at least one transport element operable to passively add and drop one or more traffic streams to and from the optical ring, each traffic stream comprising at least one channel; and
the plurality of nodes comprising a combination node, the combination node comprising:
a coupler node transport element operable to drop and continue optical traffic passing through the coupler node transport element; and
a hub node transport element cascaded with the coupler node transport element, the hub node transport element operable to selectively pass or terminate a plurality of individual channels of the optical traffic.

30. The optical network of Claim 29, wherein the plurality of nodes further comprise a plurality of sub-band nodes each operable to terminate a respective sub-band of the optical traffic.

31. The optical network of Claim 29, wherein the hub node transport element comprises
a demultiplexer operable to demultiplex the optical traffic into its constituent channels;
a plurality of switches each operable to pass or terminate a respective channel; and
a multiplexer operable to multiplex each channel passed at the plurality of switches for communication on the optical ring.

32. An optical network, comprising:
an optical ring operable to communicate optical traffic;
a plurality of nodes coupled to the optical ring, each node comprising at least one transport element operable to passively add and drop one or more traffic streams to and from the optical ring, each traffic stream comprising at least one channel; and
the plurality of nodes comprising a combination node, the combination node comprising:
a sub-band node transport element operable to terminate a respective sub-band of the optical traffic; and
a hub node transport element cascaded with the sub-band node transport element, the hub node transport element operable to selectively pass or terminate a plurality of individual channels of the optical traffic.

33. The optical network of Claim 32, wherein the plurality of nodes further comprise a plurality of sub-band nodes each operable to terminate a respective sub-band of the optical traffic.

34. The optical network of Claim 32, wherein the hub node transport element comprises
a demultiplexer operable to demultiplex the optical traffic into its constituent channels;
a plurality of switches each operable to pass or terminate a respective channel; and
a multiplexer operable to multiplex each channel passed at the plurality of switches for communication on the optical ring.

35. An optical network, comprising:
an optical ring operable to communicate optical traffic;
a plurality of nodes coupled to the optical ring, each node operable to passively add and drop one or more traffic streams to and from the optical ring, each traffic stream comprising at least one channel;
the plurality of nodes comprising:
a plurality of hub nodes operable to selectively pass or terminate a plurality of individual sub-bands of the optical traffic; and
a plurality of sub-band nodes each operable to terminate a respective sub-band of the optical traffic;
wherein the plurality of hub nodes form a plurality of photonic domains each operable to communicate different traffic streams in the same sub-bands without interference.

36. The optical network of Claim 35, wherein the plurality of hub nodes comprises two hub nodes that form two photonic domains.

37. The optical network of Claim 35, wherein the plurality of hub nodes comprises three hub nodes that form three photonic domains.

38. The optical network of Claim 35, wherein each hub node comprises:
a demultiplexer operable to demultiplex the optical traffic into its constituent sub-bands;
a plurality of switches each operable to pass or terminate a respective sub-band; and
a multiplexer operable to multiplex each sub-band passed at the plurality of switches for communication on the optical ring.

39. The optical network of Claim 38, wherein the plurality of switches are reconfigurable to provide optical shared path protection in the event of an error in the network.

40. The optical network of Claim 39, wherein the error comprises a fiber cut.

41. An optical network, comprising:
an optical ring operable to communicate optical traffic;
a plurality of nodes coupled to the optical ring, each node operable to passively add and drop one or more traffic streams to and from the optical ring, each traffic stream comprising at least one channel;
the plurality of nodes comprising:
a plurality of hub nodes operable to selectively pass or terminate a plurality of individual channels of the optical traffic; and
a plurality of sub-band nodes each operable to terminate a respective sub-band of the optical traffic;
wherein the plurality of hub nodes form a plurality of photonic domains each operable to communicate different traffic streams in the same channels without interference.

42. The optical network of Claim 41, wherein the plurality of hub nodes comprises two hub nodes that form two photonic domains.

43. The optical network of Claim 41, wherein the plurality of hub nodes comprises three hub nodes that form three photonic domains.

44. The optical network of Claim 41, wherein each hub node comprises:
a demultiplexer operable to demultiplex the optical traffic into its constituent channels;
a plurality of switches each operable to pass or terminate a respective channel; and
a multiplexer operable to multiplex each channel passed at the plurality of switches for communication on the optical ring.

45. The optical network of Claim 44, wherein the plurality of switches are reconfigurable to provide optical shared path protection in the event of an error in the network.

46. The optical network of Claim 45, wherein the error comprises a fiber cut.
